# EUROPEAN PATENT APPLICATION

(11) **EP 4 336 591 A1**
(43) Date of publication of application: **13.03.2024**
(21) Application number: 23184220.4
(22) Date of filing: 07.07.2023
(51) Int. Cl.: H01M 4/36, H01M 4/62, H01M 10/052, H01M 10/0562, H01M 4/02

(54) **POSITIVE ELECTRODE FOR ALL-SOLID-STATE BATTERY, AND ALL-SOLID-STATE BATTERY**

(30) Priority: 05.09.2022 JP 2022140486
(71) Applicant: TOYOTA JIDOSHA KABUSHIKI KAISHA, Toyota-shi, Aichi-ken, 471 8571 (JP)
(72) Inventor: VISBAL MENDOZA, Heidy Hodex, Toyota-shi, 471-8571 (JP); KUBOTA, Masaru, Toyota-shi, 471-8571 (JP); KYONO, Nobuki, Obu-shi, 474-8588 (JP)
(74) Representative: J A Kemp LLP

(57) **Abstract**

A positive electrode for an all-solid-state battery that comprises a sulfide-based solid electrolyte and a covered active material. The covered active material includes a positive electrode active material particle and a coating film covering at least part of a surface of the positive electrode active material particle. The coating film includes a lithium-ion-conductive oxide, and also includes NOx at at least a surface thereof. A NOx content at the surface of the coating film is more than 1000 ppm.

## Description

### CROSS REFERENCE TO RELATED APPLICATIONS

This nonprovisional application is based on Japanese Patent Application No. 2022-140486 filed on September 5, 2022, with the Japan Patent Office, the entire contents of which are hereby incorporated by reference.

### BACKGROUND OF THE DISCLOSURE

### Field of the Disclosure

The present disclosure relates to a positive electrode for an all-solid-state battery, and an all-solid-state battery.

### Description of the Background Art

In an all-solid-state lithium battery (a sulfide-based all-solid-state battery; which may also be simply called "an all-solid-state battery" hereinafter) that contains a lithium-ion-conductive solid electrolyte (a sulfide-based solid electrolyte), when the sulfide-based solid electrolyte comes into direct contact with positive electrode active material particles and the like, the sulfide-based solid electrolyte may degrade. When the sulfide-based solid electrolyte (an ion conduction path) degrades, battery resistance may increase. To address this problem, forming a coating film on the surface of the positive electrode active material particles is suggested. The coating film may inhibit direct contact between the positive electrode active material particles and the sulfide-based solid electrolyte to reduce degradation of the sulfide-based solid electrolyte.

As a material of the coating film, lithium-ion-conductive oxides such as lithium niobate (LiNbO₃) are known. LiNbO₃ and the like have a relatively high resistance.

Japanese Patent No. 6311630 discloses an active material having on its surface a nitrogen-containing lithium niobate layer, wherein the ratio of the element concentration of nitrogen (CN) to the element concentration of niobium (CNb) at the surface of the lithium niobate layer (CN/CNb) is from 0.08 to 0.53.

### SUMMARY OF THE DISCLOSURE

For reducing resistance of an all-solid-state battery, drying treatment is carried out for reducing the moisture content of the active material which can cause an increase of resistance. In this treatment, however, during storage of the dried active material or inside the all-solid-state battery, the active material can re-adsorb moisture to cause resistance increase.

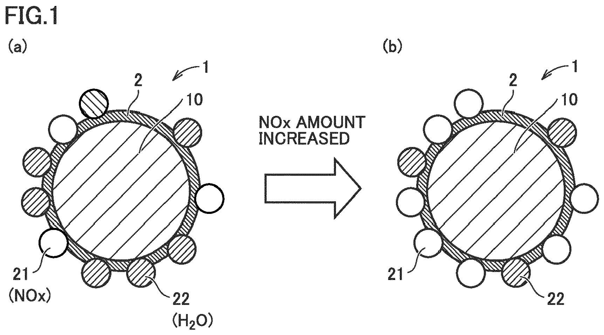

An object of the present disclosure is to provide a positive electrode for an all-solid-state battery with low resistance.
[1] A positive electrode for an all-solid-state battery, comprising:
   a sulfide-based solid electrolyte; and
   a covered active material, wherein
   the covered active material includes a positive electrode active material particle and a coating film covering at least part of a surface of the positive electrode active material particle,
   the coating film includes a lithium-ion-conductive oxide, and also includes NOx at at least a surface thereof, and
   a NOx content at the surface of the coating film is more than 1000 ppm.
   In the positive electrode according to [1] above, the NOx 21 content at the surface of covered active material 1 (coating film 2) is high. Because NOx tends not to adsorb water 22, the high NOx content leads to a decrease of the amount of moisture adsorbed on the active material (see Fig. 1). As a result, an increase of resistance of the positive electrode can be inhibited and thereby a positive electrode with low resistance can be obtained.
[2] The positive electrode according to claim 1, wherein the NOx content at the surface of the coating film is from 1050 ppm to 1500 ppm.
   When the NOx content at the surface of the coating film is too high, NOx can create resistance at the time of charge and discharge to increase the resistance of the positive electrode; in the positive electrode the according to [2] above, the NOx content is within the particular range, and, thereby, resistance is reduced more reliably.
[3] The positive electrode according to [1], wherein the ratio of a moisture content to the NOx content at the surface of the coating film is less than 1.90.
   The positive electrode according to [3] above has a high NOx content at the surface of the coating film and, accordingly, has a low moisture content of the active material, resulting in a low resistance.
[4] The positive electrode according to [3], wherein the ratio of a moisture content to the NOx content at the surface of the coating film is from 0.7 to 1.8.
   When the ratio of a moisture content to the NOx content at the surface of the coating film is too low, the resistance of the positive electrode can increase as well; in the positive electrode according to [4] above, the ratio of a moisture content to the NOx content is within the particular range, and, thereby, resistance is reduced more reliably.
[5] An all-solid-state battery comprising the positive electrode according to any one of [1] to [4].

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a schematic cross-sectional view describing a covered active material used in a positive electrode according to the present disclosure.

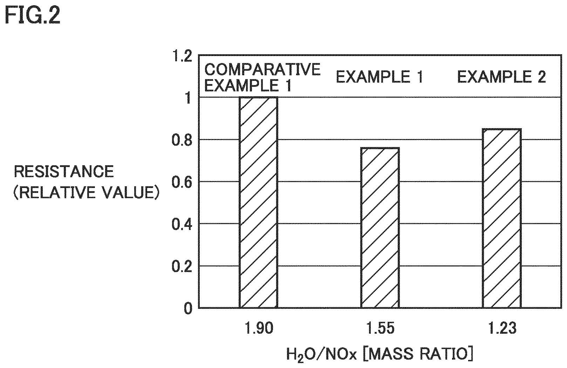

Fig. 2 is a graph showing the relationship between H₂O/NOx ratio and positive electrode resistance in each of Examples 1, 2 and Comparative Example 1.
Fig. 3 is a cross-sectional schematic view of the configuration of an all-solid-state battery according to the present embodiment.

### DESCRIPTION OF THE PREFERRED EMBODIMENTS

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure.

Herein, a singular form also includes its plural meaning, unless otherwise specified. For example, "a particle" may mean not only "one particle" but also "a group of particles (powder, particles)".

When a compound is represented by a stoichiometric composition formula (such as "LiCoO₂", for example), this stoichiometric composition formula is merely a typical example of the compound. The compound may have a non-stoichiometric composition. For example, when lithium cobalt oxide is represented as "LiCoO₂", the composition ratio of lithium cobalt oxide is not limited to "Li/Co/O=1/1/2" but Li, Co, and O may be included in any composition ratio, unless otherwise specified. Further, doping with a trace element and/or substitution may also be tolerated.

### <Positive Electrode>

A positive electrode according to the present embodiment is a positive electrode for an all-solid-state battery that comprises a sulfide-based solid electrolyte and a covered active material.

In the following, the covered active material used in the positive electrode will be described, and the configuration of the positive electrode except the covered active material will be described later in the section describing the all-solid-state battery.

### [Covered Active Material]

Referring to Fig. 1, a covered active material 1 comprises a positive electrode active material particle 10 and a coating film 2. Covered active material 1 may be called "a covered positive electrode active material" and the like, for example.

Covered active material 1 may form an aggregate, for example. More specifically, a single covered active material 1 may include two or more positive electrode active material particles 10. Covered active material 1 may have a D50 from 1 to 50 µm, or may have a D50 from 1 to 20 µm, or may have a D50 from 5 to 15 µm, for example.

Herein, "D50" refers to a particle size in volume-based particle size distribution at which the cumulative frequency accumulated from the side of small particle sizes reaches 50%. D50 may be measured by laser diffraction.

### <<Coating Film>>

Coating film 2 covers at least part of the surface of positive electrode active material particle 10.

Coating film 2 includes a lithium-ion-conductive oxide, and also includes NOx at at least the surface thereof.

The lithium-ion-conductive oxide is an oxide that has lithium-ion conductivity. The lithium-ion-conductive oxide may be an oxide that includes lithium and a non-lithium element, for example. As the lithium-ion-conductive oxide, lithium niobate (LiNbO₃) can be preferably used, for example. The Li composition ratio in the lithium-ion-conductive oxide is 2.5 or less, for example. As long as lithium-ion conductivity is attained, the Li composition ratio may be zero.

### (NOx Content)

The NOx content at the surface of coating film 2 (covered active material 1) (NOx content) is more than 1000 ppm. The NOx content at the surface of coating film 2 is preferably from 1050 ppm to 1500 ppm, more preferably from 1050 ppm to 1400 ppm, further preferably from 1100 ppm to 1400 ppm, further preferably from 1100 ppm to 1300 ppm, further preferably from 1100 ppm to 1250 ppm.

The NOx content at the surface of the covered active material may be measured by XPS elemental analysis, and, for example, may be measured in the same manner as in the Examples section below. The NOx content measured by XPS in the present embodiment is the NOx content at the surface of the coating film. This content reflects, but is not equivalent to, the NOx content of the coating film (the entirety in the thickness direction).

### (H₂O/NOx Ratio)

The ratio of the moisture content of the covered active material to the NOx content (H₂O/NOx ratio) is preferably less than 1.90, more preferably from 0.7 to 1.8, further preferably from 1.2 to 1.7, further preferably from 1.3 to 1.7.

The moisture content of the covered active material may be measured by TPD-MS, in the same manner as in the Examples section below.

In covered active material 1, the covering rate of the surface of positive electrode active material particle 10 with coating film 2 may be 70% or more, for example. When the covering rate is 70% or more, battery resistance is expected to be reduced. For example, the covering rate may be 85% or more, or may be 88% or more, or may be 89% or more, or may be 90% or more, or may be 94% or more, or may be 95% or more, or may be 97% or more. For example, the covering rate may be 100%, or may be 99% or less. For example, the covering rate may be from 85 to 97%, or may be from 90 to 97%. The covering rate may also be measured by XPS.

Coating film 2 may have a thickness from 5 to 100 nm, or may have a thickness from 5 to 50 nm, or may have a thickness from 10 to 30 nm, or may have a thickness from 20 to 30 nm, for example.

The thickness of the coating film may be measured by the procedure described below. The covered active material is embedded into a resin material to prepare a sample. With the use of an ion milling apparatus, a cross section of the sample is exposed. For example, an ion milling apparatus "Arblade (registered trademark) 5000" (trade name) manufactured by Hitachi High-Technologies (or a similar product) may be used. The cross section of the sample is examined by an SEM (Scanning Electron Microscope). For example, an SEM apparatus "SU8030" (trade name) manufactured by Hitachi High-Technologies (or a similar product) may be used. For each of ten covered active materials, the film thickness is measured in twenty fields of view. The arithmetic mean of a total of 200 film thickness measurements is regarded as the film thickness.

### <<Positive Electrode Active Material Particle>>

Positive electrode active material particle 10 is the core of covered active material 1. Positive electrode active material particle 10 may be a secondary particle (a group of primary particles). Positive electrode active material particle 10 (secondary particle) may have a D50 from 1 to 50 µm, or may have a D50 from 1 to 20 µm, or may have a D50 from 5 to 15 µm, for example. The primary particles may have a maximum Feret diameter from 0.1 to 3 µm, for example.

Positive electrode active material particle 10 may include any component. Positive electrode active material particle 10 may include, for example, at least one selected from the group consisting of LiCoO₂, LiNiO₂, LiMnO₂, LiMn₂O₄, Li(NiCoMn)O₂, Li(NiCoAl)O₂, and LiFePO₄. "(NiCoMn)" in "Li(NiCoMn)O₂", for example, means that the constituents within the parentheses are collectively regarded as a single unit in the entire composition ratio. As long as (NiCoMn) is collectively regarded as a single unit in the entire composition ratio, the amounts of individual constituents are not particularly limited. For example, Li(NiCoMn)O₂ may include Li(Ni_{1/3}Co_{1/3}Mn_{1/3})O₂, Li(Ni_{0.5}Co_{0.2}Mn_{0.3})O₂, Li(Ni_{0.8}Co_{0.1}Mn_{0.1})O₂, and/or the like.

### <All-Solid-State Battery>

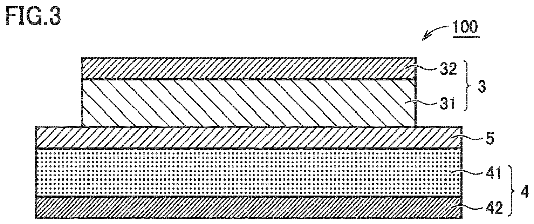

Fig. 3 is a conceptual view of an all-solid-state battery according to the present embodiment. An all-solid-state battery 100 includes a positive electrode 3, a separator layer 5, and a negative electrode 4.

All-solid-state battery 100 may include an exterior package (not illustrated), for example. The exterior package may be a pouch made of metal foil laminated film and/or the like, for example. The exterior package may accommodate a power generation element that includes positive electrode 3, separator layer 5, and negative electrode 4.

### <<Positive Electrode>>

Positive electrode 3 is of layered form. For example, positive electrode 3 may include a positive electrode active material layer 31 and a positive electrode current collector 32. For example, positive electrode active material layer 31 may be formed by applying a material of the positive electrode active material layer to the surface of positive electrode current collector 32. For example, positive electrode current collector 32 may include an Al foil and/or the like. For example, positive electrode current collector 32 may have a thickness from 5 to 50 µm.

Positive electrode active material layer 31 may have a thickness from 10 to 200 µm, for example. Positive electrode active material layer 31 is closely adhered to separator layer 5. Positive electrode active material layer 31 includes a covered active material (a covered positive electrode active material) and a sulfide-based solid electrolyte. The details of the covered active material are as described above.

The sulfide-based solid electrolyte may form an ion conduction path in positive electrode active material layer 31. The amount of the sulfide-based solid electrolyte to be used may be, for example, from 1 to 200 parts by volume, or from 50 to 150 parts by volume, or from 50 to 100 parts by volume, relative to 100 parts by volume of the covered active material (the covered positive electrode active material). The sulfide-based solid electrolyte includes S. The sulfide-based solid electrolyte may include Li, P, and S, for example. The sulfide-based solid electrolyte may further include O, Si, and/or the like, for example. The sulfide-based solid electrolyte may further include a halogen and/or the like, for example. The sulfide-based solid electrolyte may further include iodine (I), bromine (Br), and/or the like, for example. The sulfide-based solid electrolyte may be of glass ceramic type, or may be of argyrodite type, for example. The sulfide-based solid electrolyte may include, for example, at least one selected from the group consisting of LiI-LiBr-Li₃PS₄, Li₂S-SiS₂, LiI-Li₂S-SiS₂, LiI-Li₂S-P₂S₅, LiI-Li₂O-Li₂S-P₂S₅, LiI-Li₂S-P₂O₅, LiI-Li₃PO₄-P₂S₅, Li₂S-P₂S₅, and Li₃PS₄.

For example, "LiI-LiBr-Li₃PS₄" refers to a sulfide-based solid electrolyte produced by mixing LiI, LiBr, and Li₃PS₄ in any molar ratio. For example, the sulfide-based solid electrolyte may be produced by a mechanochemical method. "Li₂S-P₂S₅" includes Li₃PS₄. Li₃PS₄ may be produced by, for example, mixing Li₂S and P₂S₅ in "Li₂S/P₂S₅ = 75/25 (molar ratio)".

Positive electrode active material layer 31 may further include a conductive material, for example. The conductive material may form an electron conduction path in positive electrode active material layer 31. The amount of the conductive material to be used may be, for example, from 0.1 to 10 parts by mass relative to 100 parts by mass of the covered active material. The conductive material may include any component. The conductive material may include, for example, at least one selected from the group consisting of carbon black, vapor grown carbon fiber (VGCF), carbon nanotube (CNT), and graphene flake.

Positive electrode active material layer 31 may further include a binder, for example. The amount of the binder to be used may be, for example, from 0.1 to 10 parts by mass relative to 100 parts by mass of the covered active material. The binder may include any component. The binder may include, for example, at least one selected from the group consisting of polyvinylidene difluoride (PVdF), vinylidene difluoride-hexafluoropropylene copolymer (PVdF-HFP), styrene-butadiene rubber (SBR), and polytetrafluoroethylene (PTFE).

### <<Negative Electrode>>

Negative electrode 4 is of layered form. For example, negative electrode 4 may include a negative electrode active material layer 41 and a negative electrode current collector 42. For example, negative electrode active material layer 41 may be formed by applying a material of the negative electrode active material layer to the surface of negative electrode current collector 42. Negative electrode current collector 42 may include a Cu foil, a Ni foil, and/or the like, for example. Negative electrode current collector 42 may have a thickness from 5 to 50 µm, for example.

Negative electrode active material layer 41 may have a thickness from 10 to 200 µm, for example. Negative electrode active material layer 41 is closely adhered to separator layer 5. Negative electrode active material layer 41 includes a negative electrode active material particle and a sulfide-based solid electrolyte. Negative electrode active material layer 41 may further include a conductive material and a binder. Negative electrode active material layer 41 and positive electrode active material layer 31 may include the same type of, or different types of, sulfide-based solid electrolyte. The negative electrode active material particle may include any component. The negative electrode active material particle may include, for example, at least one selected from the group consisting of graphite, Si, SiOₓ (0<x<2), and Li₄Ti₅O₁₂.

### <<Separator Layer>>

Separator layer 5 is interposed between positive electrode 3 and negative electrode 4. Separator layer 5 separates positive electrode 3 from negative electrode 4. Separator layer 5 includes a sulfide-based solid electrolyte. Separator layer 5 may further include a binder. Separator layer 5 and positive electrode active material layer 31 may include the same type of, or different types of, sulfide-based solid electrolyte. Separator layer 5 and negative electrode active material layer 41 may include the same type of, or different types of, sulfide-based solid electrolyte.

### <Method of Producing Covered Active Material>

A method of producing a covered active material according to the present embodiment includes "(a) preparing a mixture" and "(b) producing a covered active material". The present production method may further include "(c) heat treatment" and the like, for example.

### «(a) Preparing Mixture»

The present production method includes preparing a mixture by mixing a coating liquid and a positive electrode active material particle (allowing the coating liquid to adhere to the surface of the positive electrode active material particle). The details of the positive electrode active material particle are as described above.

For example, the mixture may be a suspension, or may be a wet powder, as long as the coating liquid is adhered to the surface of the positive electrode active material particle in the mixture. For example, the suspension may be formed by dispersing the positive electrode active material particle (powder) in the coating liquid. For example, the wet powder may be formed by spraying the coating liquid into powder that includes the positive electrode active material particle. In the present production method, any mixing apparatus and/or any granulating apparatus may be used, for example.

The coating liquid includes a solute (including a solute and a dispersoid) and a solvent (a solvent and a dispersion medium, or a solvent).

In the present embodiment, it is preferable to add aqueous NH₃ solution to the coating liquid. By this, it is possible to increase the amount of NOx in the coating film. However, this method is not the only method for increasing the amount of NOx in the coating film, and, alternatively, lithium nitrate (LiNOs) may be added to the coating liquid, or NOx gas flow may be used for having NOx adsorbed on the covered active material that is covered with the coating film, for example.

The solute includes a raw material of the coating film, such as the lithium-ion-conductive oxide described above. For example, the total amount of the solute may be from 0.1 to 20 parts by mass, or may be from 1 to 15 parts by mass, or may be from 5 to 10 parts by mass, relative to 100 parts by mass of the solvent.

The solute may further include Li, and, for example, may include a lithium compound. The lithium compound may be lithium hydroxide, lithium carbonate, lithium nitrate, and/or the like, for example.

The solvent may include any component as long as it can dissolve the solute. The solvent may include water, alcohol, and/or the like, for example. The solvent may include ion-exchanged water and/or the like, for example.

### <<(b) Producing Covered Active Material>>

The present production method includes producing a covered active material by drying the mixture described above. The coating liquid that is adhered to the surface of the positive electrode active material particle is dried, and thereby a coating film is produced, and thus a covered active material is produced. In the present production method, any drying method may be employed.

When the mixture is a suspension that includes the positive electrode active material particle and the coating liquid, spray drying may be employed to form the covered active material, for example. More specifically, the suspension that includes the positive electrode active material particle and the coating liquid may be sprayed from a nozzle, and the sprayed droplets may be dried by the use of hot air, for example, to form the covered active material. The use of spray drying is expected to enhance the covering rate, for example.

The solid content (volume fraction) of the suspension for use in the spray drying may be from 1 to 50%, or may be from 10 to 30%, for example. The diameter of the nozzle may be from 0.1 to 10 mm, or may be from 0.1 to 1 mm, for example. The temperature of the hot air may be from 100 to 200°C, for example.

For example, a tumbling fluidized-bed coating apparatus may be used to produce the covered active material. Such a tumbling fluidized-bed coating apparatus is capable of performing "(a) preparing a mixture" (making the coating liquid adhere to the surface of the positive electrode active material particle) and "(b) producing a covered active material" at the same time.

### <<(c) Heat Treatment>>

The present production method may include subjecting the covered active material to heat treatment. The heat treatment allows the coating film to be fixed. The heat treatment may also be called "calcination". In the present production method, any heat treatment apparatus may be used. The temperature of the heat treatment may be from 150 to 300°C, for example. The duration of the heat treatment may be from 1 to 10 hours, for example. The heat treatment may be carried out in the air, or the heat treatment may be carried out in an inert atmosphere, for example.

### [Examples]

### <Comparative Example 1>

### [Preparing Covered Active Material]

Into a vessel, 100 parts by mass of a hydrogen peroxide solution (mass concentration, 30%) was added. Then, to the vessel, 113.4 parts by mass of ion-exchanged water and 5.1 parts by mass of niobium oxide [Nb₂O₅·3H₂O] were added. Then, to the vessel, 10.1 parts by mass of an aqueous ammonia solution (mass concentration, 28%) was added. The content of the vessel was sufficiently stirred to prepare a solution. Into the resulting solution, 1.2 parts by mass of lithium oxide (Li₂O·H₂O) was further dissolved to prepare a coating liquid.

As a positive electrode active material particle, LiNi_{0.8}Co_{0.15}Al_{0.05}O₂ was prepared. 100 parts by mass of the positive electrode active material particle in powder form was dispersed in 53.8 parts by mass of the coating liquid to prepare a suspension. The resulting suspension was spray-dried to prepare powder of covered active material.

The resulting covered active material was subjected to heat treatment in an air atmosphere. The temperature of the heat treatment was 200°C. The duration of the heat treatment was 5 hours. Thus, a covered active material (a covered positive electrode active material) having a coating film with a thickness of about 10 nm was obtained. The coating film of the covered active material is expected to include lithium niobate (LiNbO₃).

### [Producing All-Solid-State Battery]

### (Producing Positive Electrode)

The below materials were prepared.
Sulfide-based solid electrolyte: Li₂S-P₂S₅-type glass ceramic
Conductive material: carbon nanotubes
Binder: SBR (styrene-butadiene rubber)
Dispersion medium: 1,2,3,4-tetrahydronaphthalene
Positive electrode current collector: Al foil

The covered active material, the sulfide-based solid electrolyte, the conductive material, the binder, and the dispersion medium were mixed together to prepare a positive electrode slurry. Relative to 100 parts by mass of the positive electrode slurry, the amount of the covered active material (the positive electrode active material) to be used was 81.2 parts by mass, the amount of the sulfide-based solid electrolyte to be used was 16.5 parts by mass, the amount of the conductive material to be used was 1.9 parts by mass, and the amount of the binder to be used was 0.3 parts by mass.

With the use of an ultrasonic homogenizer (manufactured by SMT, UH-50), the positive electrode slurry was stirred sufficiently. The positive electrode slurry was applied to the surface of the positive electrode current collector, and thereby coating was formed. With the use of a hot plate, the resulting coating was dried at 100°C for 30 minutes. Thus, a positive electrode raw sheet was produced. From the resulting positive electrode raw sheet, a positive electrode was cut out.

### (Producing Negative Electrode)

Into a kneading vessel of a filmix apparatus, a sulfide-based solid electrolyte (sulfide-based glass solid electrolyte, Li₂S-P₂S₅-type glass ceramic), a conductive aid (carbon nanotubes), a binder (SBR, styrene-butadiene rubber), and a solvent (diisobutyl ketone) were added and stirred. Then, a negative electrode active material (Li₄Ti₅O₁₂ particles) was added to the kneading vessel and stirred with the use of the filmix apparatus to prepare a negative electrode composite material slurry.

Relative to 100 parts by mass of the material of the negative electrode active material layer (except solvent), the amount of the negative electrode active material to be used was 72.2 parts by mass, the amount of the sulfide-based solid electrolyte to be used was 24.3 parts by mass, the amount of the conductive material to be used was 2.4 parts by mass, and the amount of the binder to be used was 1.8 parts by mass.

The negative electrode composite material slurry thus prepared was applied to the negative electrode current collector (Ni foil), and dried at 100°C for 30 minutes. Thus, a negative electrode raw sheet was produced. From the resulting negative electrode raw sheet, a negative electrode was cut out.

### (Producing Separator)

Into a kneading vessel of a filmix apparatus, a sulfide-based solid electrolyte (sulfide-based glass solid electrolyte, Li₂S-P₂S₅-type glass ceramic), a binder (ABR, acrylate butadiene rubber), and a solvent (a mixed liquid of n-heptane and butyl butyrate) were added and stirred with the use of the filmix apparatus to prepare a separator composite material slurry.

Relative to 100 parts by mass of the material of the separator (except solvent), the amount of the sulfide-based solid electrolyte to be used was 99.6 parts by mass, and the amount of the binder to be used was 0.4 parts by mass.

The separator composite material slurry thus prepared was applied to a base material (Al foil) and dried at 100°C for 30 minutes. Thus, a separator raw sheet was produced. From the resulting separator raw sheet, a separator of the same size as the negative electrode was cut out.

### (Producing Battery)

The positive electrode was put on one side of the separator, and the negative electrode was put on the other side of the separator, followed by pressing at 6 ton/cm² for 1 minute. Then, with a terminal (a tab lead) inserted in the positive electrode and the negative electrode, restraining was performed at 1 ton. The resulting power storage element was covered with a laminated film to produce an all-solid-state battery (a small laminated cell).

### <Example 1>

The coating liquid includes a certain amount of NH₃. This seems to be one of the reasons for the presence of NOx in the coat film. In Example 1, for increasing the amount of NOx in the coat film, 39.0 mg of aqueous NH₃ solution was added to 26.0 to 26.5 g of the coating liquid. The concentration of the aqueous NH₃ solution was from 14 to 15 mass%. In this way, the coating liquid was prepared.

Except this, in the same manner as in Comparative Example 1, a covered active material, a positive electrode, and a battery of Example 1 were produced.

Specifically, the amount of the aqueous NH₃ solution added was 0 mg in Comparative Example 1, 39.0 mg in Example 1, and 220.0 mg in Example 2.

### <Example 2>

In Example 2, for further increasing the amount of NOx in the coat film, 220.0 mg of aqueous NH₃ solution was added to 26.0 to 26.5 g of the coating liquid.

Except this, in the same manner as in Example 1, a covered active material, a positive electrode, and a battery of Example 2 were produced.

### <Evaluation>

### [Measuring NOx Content at Surface of Covered Active Material (Coating Film)]

For each covered active material (covered positive electrode active material) of Examples and Comparative Example described above, the NOx content at the surface of the covered active material was measured.

Specifically, by the procedure described below, XPS elemental analysis was performed for the surface of the coating film, and from the elemental analysis results thus obtained, the NOx content was determined.

An XPS apparatus is prepared. For example, an XPS apparatus "PHI X-tool" (trade name) manufactured by ULVAC-PHI (or a similar product) may be used. A sample powder consisting of the covered active material is loaded in the XPS apparatus. With a pass energy of 224 eV, narrow scan analysis is carried out. The measurement data is processed with analysis software. For example, an analysis software "MulTiPak" (trade name) manufactured by ULVAC-PHI (or a similar product) may be used. From the peak area (integral value) of NOx spectrum, the NOx content at the surface of the covered active material (the coating film) is determined.

### [Measuring Moisture Content of Covered Active Material]

For each covered active material of Examples and Comparative Example described above, the moisture content was measured.

The moisture content of the covered active material is determined as follows. By TPD-MS (evolved gas analysis, Temperature Programmed Desorption-Mass Spectrometry), while the temperature of the covered active material is raised from 25°C (room temperature) to 500°C, the cumulative value of the concentration of moisture (the cumulative moisture content) generated by the covered active material is measured. The ratio of the cumulative moisture content to the total mass of the covered active material (except moisture) is the moisture content of the covered active material. The unit of the moisture content is "ppm" (wt ppm). The TPD-MS measurement apparatus has a configuration where a mass spectrometer (MS) is connected to a special heating apparatus equipped with a temperature controller, and is capable of tracking changes in the concentration of gas generated from the sample while heated according to a certain temperature-raising program, as a function of temperature or time.

### [Measuring Post-Endurance-Test Battery Output Resistance (Charge/Discharge Evaluation)]

For each battery (all-solid-state battery) produced in Examples and Comparative Example described above, post-endurance-test battery output resistance was measured.

Specifically, activation, capacity measurement, resistance measurement, endurance testing, capacity measurement (after endurance testing), and resistance measurement (after endurance testing) were carried out in this order.

Battery activation, capacity measurement, and resistance measurement were carried out at 25°C.

Cell restraining pressure was 5 MPa per electrode area.

### (Activation)

Battery activation was carried out by performing constant current-constant voltage (CC-CV) charging (0.333 C to 0.01 C, upper limit for cutting is 2.7 V) at 1/3 C-rate and CC-CV discharging (0.333 C to 0.01 C, lower limit for cutting is 1.5 V) in this order.

### (Capacity Measurement)

For each battery, a single cycle of the same CC-CV charging and CC-CV discharging as activation was carried out. As battery capacity, discharged capacity was checked. "C" is the unit of current rate. "1 C" refers to a current rate at which SOC (State of Charge) increases from 0% to reach 100% in one hour of charging.

### (Measuring Discharge Resistance)

Each battery whose capacity was checked in the above manner was charged at 1/3 C-rate to reach an SOC (State of Charge) of 75, 40, or 20%. Subsequently, the voltage change (ΔV) at the time of passage of a current at 2.5 C-rate (discharging) was measured, and, based on Ohm's law (V=IR), resistance (discharge resistance) was calculated.

These capacity measurement and resistance measurement were also carried out for the battery after endurance testing (trickle testing, upper limit voltage at 2.7 V, two weeks, 60°C).

Table 1 shows measurement results of post-endurance-test discharge resistance (the ratio to the discharge resistance in Comparative Example 1, which was regarded as 1.00). The lower the discharge resistance is, the higher the battery output properties (discharge rate) are.

**[Table 1]**

| | NOx content [ppm] | Moisture content [ppm] | H₂O/NOx | N/Nb | Resistance (relative value) |
|---|---|---|---|---|---|
| Comp. Ex. 1 | 1000 | 1900 | 1.90 | 0.51 | 1.00 |
| Ex. 1 | 1100 | 1700 | 1.55 | 0.32 | 0.76 |
| Ex. 2 | 1300 | 1600 | 1.23 | 0.15 | 0.85 |

The results shown in Table 1 indicate that an increase of resistance of the positive electrode (the battery) is inhibited in Examples 1 and 2 where the NOx content is high. This may be because the moisture content and the H₂O/NOx ratio decreased in Examples 1 and 2.

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

## Claims

1. A positive electrode for an all-solid-state battery, comprising:
a sulfide-based solid electrolyte; and
a covered active material (1), wherein
the covered active material (1) includes a positive electrode active material particle (10) and a coating film (20) covering at least part of a surface of the positive electrode active material particle (10),
the coating film (20) includes a lithium-ion-conductive oxide, and also includes NOx (21) at at least a surface thereof, and
a NOx (21) content at the surface of the coating film (20) is more than 1000 ppm.

2. The positive electrode according to claim 1, wherein the NOx (21) content at the surface of the coating film (20) is from 1050 ppm to 1500 ppm.

3. The positive electrode according to claim 1 or 2, wherein the ratio of a moisture content to the NOx (21) content at the surface of the coating film (20) is less than 1.90.

4. The positive electrode according to claim 3, wherein the ratio of a moisture content to the NOx (21) content at the surface of the coating film (20) is from 0.7 to 1.8.

5. An all-solid-state battery comprising the positive electrode according to any one of claims 1 to 4.
